# EUROPEAN PATENT APPLICATION

(11) **EP 4 350 595 A1**
(43) Date of publication of application: **10.04.2024**
(21) Application number: 23191857.4
(22) Date of filing: 17.08.2023
(51) Int. Cl.: G06Q 20/20, G06Q 20/40, G07G 1/00

(54) **SALES DATA PROCESSING APPARATUS AND METHOD**

(30) Priority: 05.10.2022 JP 2022160980
(71) Applicant: Toshiba Tec Kabushiki Kaisha, Shinagawa-ku Tokyo 141-8562 (JP)
(72) Inventor: Sonaga, Sayo, Tokyo 141-8562 (JP); Tsunoda, Mayuko, Tokyo 141-8562 (JP); Okuma, Yumiko, Tokyo 141-8562 (JP)
(74) Representative: Bandpay & Greuter

(57) **Abstract**

According to one embodiment, a sales data processing apparatus, such as point-of-sale terminal or the like, includes a processor. The processor is configured to register commodity information for commodities in a sales transaction, receive an operator selection designating an item of registered commodity information, and then receive editing data for editing the designated item of registered commodity information. The processor then edits the designated item of registered commodity information according to the received editing data and causes a display screen to display the edited item of registered commodity information and the unedited item of registered commodity information together on the display screen. In some examples, the edited and unedited information may be displayed adjacent to one another and in a different font format.

## Description

### FIELD

The present disclosure relates to sales data processing apparatuses and methods for sales data processing apparatuses such as those in retail stores.

### BACKGROUND

In stores in which a commodity or a service (collectively referred to in the following as a "commodity" or a "product") is sold, a sales data processing apparatus such as a point of sales (POS) terminal can be used. The POS terminal registers commodity information of the product(s) being purchased by a customer, and then executes payment processing operations based on the registered commodity information. In the following, the registration of the commodity information may be referred to as "commodity registration," "sales data processing," or the like.

In the related art, a POS terminal that can edit registered commodity information has been proposed. The POS terminal displays an editing screen for selected commodity information from among all the registered commodity information. The POS terminal edits the commodity information based on the input made using the editing screen. Accordingly, an operator who operates the POS terminal can revise the data regarding a registered item (product) such as changing a price or the quantity of the item registered.

However, when the editing data is input, the related-art POS terminal may replace the commodity information displayed on the editing screen with the updated/revised information. Therefore, the related-art POS terminal does not allow the operator to easily distinguish whether the commodity information now displayed on the editing screen is before editing or after editing, and thus operability of the POS terminal is not good in this regard.

To this end, a sales data processing apparatus, a point-of-sale terminal for retail stores, and a sales data processing method according to appended claims are provided.

### BRIEF DESCRIPTION OF THE DRAWINGS

FIG. 1 is a perspective view showing an appearance of a POS terminal according to an embodiment.
FIG. 2 is a block diagram of a POS terminal according to an embodiment.
FIG. 3 is a block diagram related to a control unit of a POS terminal according to an embodiment.
FIG. 4 is a flowchart of sales transaction processing.
FIG. 5 is a flowchart of editing that may be performed in a sales transaction processing.
FIG. 6 is a diagram showing a first registration screen.
FIG. 7 is a diagram showing a first editing screen.
FIG. 8 is a diagram showing a second editing screen.
FIG. 9 is a diagram showing a second registration screen.

### DETAILED DESCRIPTION

In general, according to one embodiment, a sales data processing apparatus and a method for a sales data processing apparatus that provides a technological solution to existing problems in the related art so as to improve operability of an operator are described. In the existing art, editing of previously registered information may be difficult since edited information is not easily compared to the original information.

According to one embodiment, a sales data processing apparatus includes a processor. The processor is configured to register commodity information for commodities in a sales transaction, receive an operator selection designating an item of registered commodity information, and then receive editing data for editing the designated item of registered commodity information. The processor is further configured to edit the designated item of registered commodity information according to the received editing data and cause a display screen to display the edited item of registered commodity information and the unedited item of registered commodity information together on the display screen.

Hereinafter, a sales data processing apparatus and a method according to certain example embodiments will be described with reference to drawings. The present disclosure is not limited to these particular described examples. For example, in the embodiment described below, an example in which a POS terminal that can execute commodity registration and payment processing will be described, but the present disclosure is not limited thereto. In other examples, a sales data processing apparatus need not itself have a commodity registration function or a payment function as long as such a sales data processing apparatus has a function of editing registered commodity information in a sales transaction or the like.

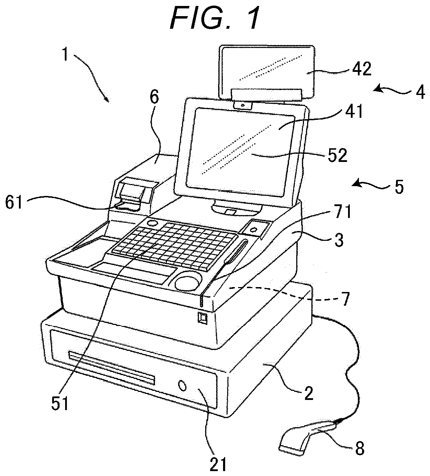

FIG. 1 is a perspective view showing an appearance of a POS terminal 1 that is one example of a sales data processing apparatus. The POS terminal 1 is installed in, for example, a store such as a supermarket, executes a commodity registration operation for a commodity being purchased by a customer, and also performs the settlement processing based on commodity information registered in the commodity registration operation. In this context, "settlement" is processing performed by the POS terminal 1 in order to complete payment of a purchase price of registered items or the like.

The POS terminal 1 includes a drawer 2 (e.g., cash drawer) and a main body 3 (e.g., housing). The main body 3 is placed on top of the drawer 2 in this example.

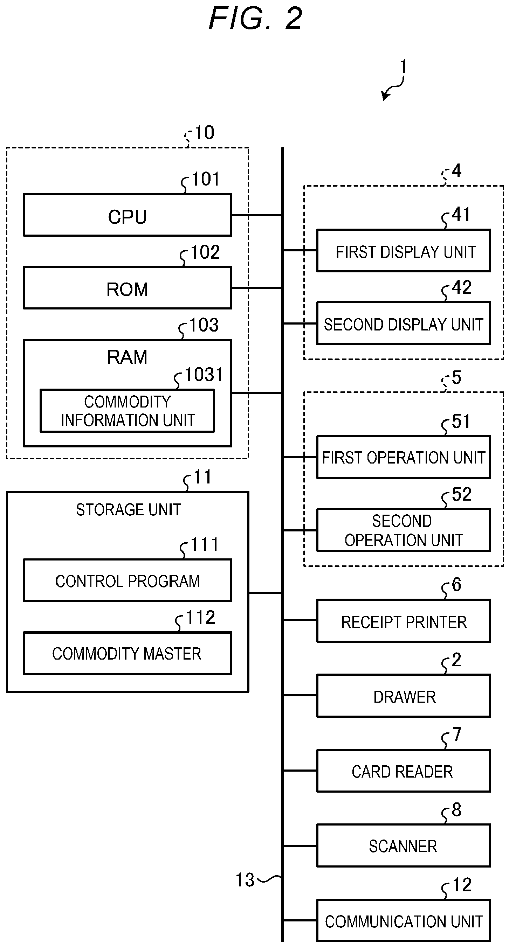

The drawer 2 is a storage device that stores cash, cash vouchers, coupons, and the like. The drawer 2 includes a drawer 21 provided with cash storage units (sections) for different currency denominations or the like. The drawer 21 can be opened and closed and is opened by control of a control unit 10 (see FIG. 2).

The main body 3 includes a display unit 4, an operation unit 5, a receipt printer 6, a card reader 7, and a scanner 8.

The display unit 4 includes a first display unit 41 (operator display unit) and a second display unit 42 (customer display unit). The first display unit 41 and the second display unit 42 are implemented as, for example, display devices such as liquid crystal displays (LCD).

The first display unit 41 displays various kinds of information to an operator (e.g., a store clerk). For example, the first display unit 41 displays a registration screen during the commodity registration, an editing screen for editing the registered commodity information, and the like. The editing screen displays the registered commodity information and editing data for editing the commodity information. The first display unit 41 is an example of a display unit that displays the commodity information and the editing data on the same screen. The second display unit 42 displays various kinds of information to the customer. For example, the second display unit 42 displays the registered commodity information, a transaction amount, and the like. In the following description, the first display unit 41 and the second display unit 42 are referred to as a display unit 4 when not particularly distinguished from each other.

The operation unit 5 is implemented by a first operation unit 51 and a second operation unit 52. The first operation unit 51 is implemented by a keyboard provided on an upper surface of the main body 3. The first operation unit 51 includes a plurality of hardware keys such as numeric keys, a clear key, a return key, a subtotal key, and a confirmation key. The numeric keys are keys for inputting numerical values such as a commodity code or an amount of money. The clear key is a key for canceling an operation when an error occurs. The return key is a key for canceling a current operation to return to a previous screen. The subtotal key is a key for completing the commodity registration and declaring calculation of a total sales amount. The confirmation key is a key pressed down when confirming an input operation. The second operation unit 52 is implemented by a touch panel provided on a surface of the first display unit 41. The second operation unit 52 inputs, to the control unit 10, information corresponding to a position touched by a cashier on each operation screen displayed on the first display unit 41. In the following description, the first operation unit 51 and the second operation unit 52 are referred to as an operation unit 5 when not particularly distinguished from each other. The first operation unit 51 made of the keyboard may not be provided.

The receipt printer 6 is implemented by, for example, a thermal printer. The receipt printer 6 includes an issue port 61. The receipt printer 6 prints transaction information or the like on receipt paper, and issues the printed receipt from the issue port 61. The information printed on the receipt can be the registered commodity information, the transaction amount, and the like regarding the items purchased by the customer.

The card reader 7 is built in the main body 3. The card reader 7 includes a card reading groove 71 positioned in the upper surface of the main body 3. The card reader 7 reads information of a magnetic card inserted into the card reading groove 71 and slid. For example, the card reader 7 reads a member code from a medium such as a member card or a point card of the customer. Further, the card reader 7 reads customer information necessary for credit card settlement from a credit card of the customer. The card reader 7 may be an IC card reader that reads information from a card in which an IC chip is built. Instead of or in addition to the card reader 7, the POS terminal 1 may include a settlement terminal that enables various cashless settlement.

The scanner 8 optically recognizes a code symbol such as a bar code attached to the commodity purchased by the customer. The scanner 8 decodes the recognized code symbol and reads a commodity code corresponding to the code symbol. The decoding of the code symbol recognized by the scanner 8 may be performed by the control unit 10.

FIG. 2 is a block diagram showing a main hardware configuration of the POS terminal 1. The POS terminal 1 includes the control unit 10, a storage unit 11, the first display unit 41, the second display unit 42, the first operation unit 51, the second operation unit 52, the receipt printer 6, the drawer 2, the card reader 7, the scanner 8, and a communication unit 12. The control unit 10, the storage unit 11, the first display unit 41, the second display unit 42, the first operation unit 51, the second operation unit 52, the receipt printer 6, the drawer 2, the card reader 7, the scanner 8, and the communication unit 12 are connected to one another via a bus 13 or the like.

The control unit 10 includes a central processing unit (CPU) 101, a read only memory (ROM) 102, and a random access memory (RAM) 103. The CPU 101, the ROM 102, and the RAM 103 are connected to one another via the bus 13. The control unit 10 may be considered a computer or the like.

The CPU 101 controls overall operations of the POS terminal 1. The ROM 102 stores various programs such as programs used for driving the CPU 101 and various kinds of data. The RAM 103 is used as a work area of the CPU 101, and various programs and the various kinds of data stored in the ROM 102 and the storage unit 11 may be loaded into the RAM 103. The control unit 10 executes various kinds of control of the POS terminal 1 by the CPU 101 executing the control programs stored in the ROM 102 or the storage unit 11.

The RAM 103 includes a commodity information unit 1031. The commodity information unit 1031 stores the commodity information of the item(s) purchased by the customer. Specifically, the commodity information unit 1031 stores the commodity information read from the storage unit 11 based on a commodity code read by the scanner 8. The commodity registration is performed by registering the commodity information for each product being purchased in the commodity information unit 1031.

The storage unit 11 is implemented by a storage medium such as a hard disk drive (HDD) or a flash memory, and maintains a storage content even if a power supply is cut off. The storage unit 11 stores a control program 111 and a commodity master 112.

The control program 111 is a program or the like for implementing a function of executing the commodity registration, a function of editing the commodity information that has been registered in the commodity registration, a function of executing a settlement based on the registered (and perhaps edited) commodity information, a function of displaying various kinds of information on the display unit 4, and the like.

The commodity master 112 is a master file that stores the commodity information of the commodities sold by a store. The commodity master 112 can be transmitted from a store server or the like and stored in the storage unit 11. Since products handled in the store and information associated with such products may change every day (or more or less frequently), the commodity master 112 may be appropriately updated. The commodity master 112 stores information for each commodity (product) such as a commodity name, a price, and a commodity image (representative picture) in association with a commodity code.

The configurations and the functions of the first display unit 41, the second display unit 42, the first operation unit 51, the second operation unit 52, the receipt printer 6, the drawer 2, the card reader 7, and the scanner 8 are substantially similar to those already described above. The communication unit 12 is an interface for communicating with an external device such as the store server. The control unit 10 can transmit and receive information (data) to and from the external device by being connected to the external device via the communication unit 12.

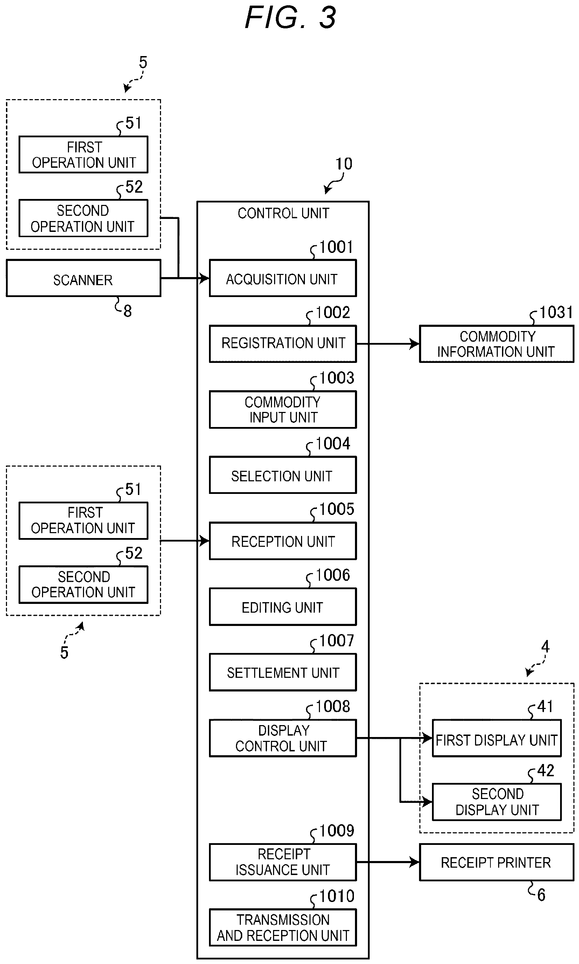

Next, a functional configuration of the control unit 10 of the POS terminal 1 will be described. FIG. 3 is a block diagram showing the main functional configuration of the control unit 10 of the POS terminal 1. The control unit 10 functions as an acquisition unit 1001, a registration unit 1002, a commodity input unit 1003, a selection unit 1004, a reception unit 1005, an editing unit 1006, a settlement unit 1007, a display control unit 1008, a receipt issuance unit 1009, and a transmission and reception unit 1010 by the CPU 101 acting according to the control programs stored in the ROM 102 and the storage unit 11. The functions may be implemented by using hardware such as a dedicated circuit.

The acquisition unit 1001 acquires the commodity code of the commodity purchased by the customer from the operation unit 5 or the scanner 8. For example, the acquisition unit 1001 acquires a commodity code read by the scanner 8 from a code symbol attached to a commodity from the scanner 8. Further, the acquisition unit 1001 acquires a commodity code input to the first operation unit 51 or the second operation unit 52 for a commodity or the like to which no code symbol is attached.

The registration unit 1002 executes the commodity registration. Specifically, the registration unit 1002 reads information corresponding to the commodity code acquired by the acquisition unit 1001 from the commodity master 112. The registration unit 1002 registers commodity information in which the commodity code and the read information are associated with each other in the commodity information unit 1031.

Editing input information is input to the commodity input unit 1003. The editing input information is information including information indicating a commodity designated by the operator among registered commodities, and instructing the operator to edit commodity information of the commodity. When the operator designates the commodity on a first registration screen, the editing input information is input to the commodity input unit 1003.

The selection unit 1004 permits any one of items of the commodity information of the commodity input to the commodity input unit 1003 to be selected. The selected item is an example of the commodity information. When the operator (user) designates (selects) an item of information to be edited on a first editing screen, the selection unit 1004 selects the user designated item to be edited (editing target). The item of information selected by the selection unit 1004 can then be edited.

The reception unit 1005 receives various kinds of information (inputs) from the operation unit 5. In this example, the reception unit 1005 receives the editing data to be used for editing the commodity information from the operation unit 5. The editing data is data for rewriting (revising) data of one or more items of the registered commodity information. For example, the editing data is data for changing such items as quantity, a unit price, a discount amount, and/or a tax rate previously stored in the commodity information unit 1031. The reception unit 1005 also receives, from the operation unit 5, information such as a transaction start declaration for a start of a transaction, and a settlement request input for calculating the present transaction amount and starting the settlement (payment) processing.

Based on the editing data received by the reception unit 1005, the editing unit 1006 changes/alters the commodity information that was selected by the selection unit 1004. Specifically, the editing unit 1006 replaces data of an item or items in the selected commodity information with the editing data as received by the reception unit 1005.

For example, in a case where "1" is registered as the value of the quantity, when the editing data indicates that the quantity should be set to "2", the editing unit 1006 rewrites the quantity in the commodity information previously registered in the commodity information unit 1031 to "2". When the reception unit 1005 receives editing data related to a unit price, a discount, or the like, the editing unit 1006 similarly rewrites such information in the commodity information unit 1031.

The settlement unit 1007 executes the settlement of the transaction based on the commodity information (including the edited commodity information) acquired by the acquisition unit 1001. In other words, the settlement unit 1007 executes processing for completing payment of a price of the commodity purchased by the customer. For example, the settlement unit 1007 calculates a total amount of money (transaction amount) of a registered commodity. When the customer performs settlement by cash, the settlement unit 1007 compares the amount of money (cash) received from the customer to the transaction amount, and then calculates the change amount as necessary. The settlement unit 1007 executes various kinds of processing for completing payment of the purchase price by the customer according to a settlement method such as cash settlement or credit settlement as selected by the customer.

The display control unit 1008 causes the display unit 4 to display various kinds of information. For example, when the commodity registration is performed, the display control unit 1008 causes the first display unit 41 to display the registration screen. Further, when the commodity information is edited, the display control unit 1008 causes the first display unit 41 to display the editing screen. The display control unit 1008 causes the same screen of the first display unit 41 to display the commodity information selected by the selection unit 1004 and the editing data received by the reception unit 1005 on the editing screen.

The display control unit 1008 causes the second display unit 42 to display the commodity information and the transaction amount of the registered commodity. The display control unit 1008 may cause the second display unit 42 to display advertisement information as necessary.

The receipt issuance unit 1009 controls the receipt printer 6 to cause the receipt printer 6 to issue a receipt related to one transaction. The receipt issuance unit 1009 may cause an electronic receipt to be issued. For example, the receipt issuance unit 1009 may output an issuance instruction for the electronic receipt to an electronic receipt server (that transmits electronic receipt information to a portable terminal (e.g., a smartphone) of the customer.

The transmission and reception unit 1010 transmits and receives various kinds of information to and from an external device such as a store server. For example, the transmission and reception unit 1010 receives the commodity master 112 from the store server. Further, the transmission and reception unit 1010 transmits transaction information on a transaction subjected to the settlement by the settlement unit 1007 to the store server.

In a case where the POS terminal 1 is connected to the settlement terminal, when the customer performs the payment of the purchase price by cashless settlement such as the credit settlement, electronic money settlement, or code settlement, the transmission and reception unit 1010 transmits transaction information on one transaction including a transaction amount and the like to the settlement terminal. Furthermore, if the settlement terminal communicates with a settlement server for processing related to the settlement of the transaction amount to be completed, the transmission and reception unit 1010 receives a settlement completion notification from the settlement terminal.

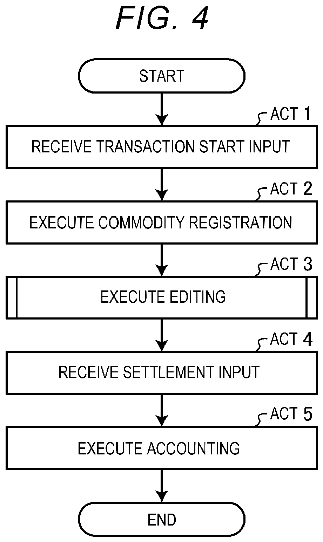

Next, a flow of a transaction using the POS terminal 1 will be described. FIG. 4 is a flowchart showing the flow of the transaction using the POS terminal 1.

When the commodity purchased by the customer is brought to the POS terminal 1, the transaction start input is performed by an operation of the operator. Accordingly, the POS terminal 1 receives a transaction start input (ACT 1). The transaction start input is performed by the operator operating the first operation unit 51 or the second operation unit 52.

Next, the scanner 8 is used to read a commodity code of the commodity being purchased by the customer. The POS terminal 1 executes the commodity registration based on the commodity code read by the scanner 8 (ACT 2).

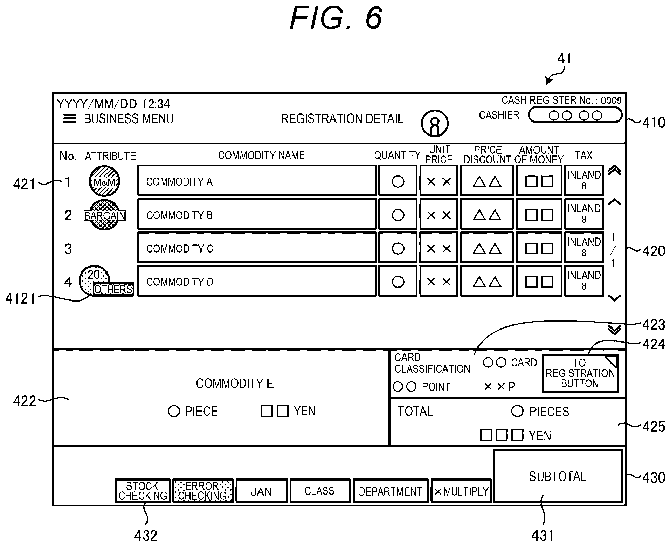

FIG. 6 is a diagram showing the first registration screen displayed on the first display unit 41 during the commodity registration. In the first registration screen, a header portion 410 is disposed in an upper section, an information display portion 420 is disposed in a middle section, and a footer portion 430 is disposed in a lower section.

The header portion 410 displays current time, text of "registration details" indicating a screen displaying registration details, a cash register No showing a number of the POS terminal 1, a name of the operator (cashier), and the like. The footer portion 430 displays a subtotal button 431 and a plurality of various buttons 432.

The information display portion 420 includes a first commodity information display portion 421, a second commodity information display portion 422, a customer information display portion 423, a shift button 424, and a transaction information display portion 425.

The first commodity information display portion 421 displays information of commodities registered so far. The information about the displayed commodity includes an attribute of the commodity, a commodity name, a quantity (size), a normal unit price, a discount amount, an extended price, a tax treatment type, and the like.

The attributes about (and the particular values) each commodity can be pre-set by a store. An icon 4121 indicating a feature of a commodity is displayed at the commodity line for which an attribute has been set. The icon 4121 is, for example, an icon indicating that a commodity is one that is a target of a preset reduction (discount), an icon indicating that a commodity is a bargain commodity (on-sale commodity), an icon indicating that a commodity is a commodity prohibited from being sold to a minor (age-controlled commodity), or the like. The attribute(s) set for any commodity can be freely set by the store, and the icon 4121 corresponding to a number of different attributes can be prepared. The icons 4121 may be grouped according to attribute type, and a different color for each group may be used. For example, any icon 4121 related to a discount may be presented in red.

When a plurality of attributes are set for one commodity, an icon of an attribute to be preferentially displayed can be displayed, and a mark indicating that there is also another attribute can also be displayed. In this case, the attribute to be preferentially displayed can be set by the store. For example, a commodity D in FIG. 6 is a bargain commodity and also a commodity prohibited from being sold to a minor, and the icon of the attribute to be preferentially displayed in this case is the icon indicating that the commodity D is prohibited from being sold to a minor. A mark ("others") indicating that there is another related attribute is also displayed.

In the first commodity information display portion 421, first registered commodity information is displayed in a No. 1 row (line item), that is, an uppermost section, and items registered thereafter are subsequently displayed in the next lower section (next row below). When the number of the registered commodities is increased and all the commodity information cannot be displayed in the first commodity information display portion 421, the commodity information displayed in the uppermost section disappears, and other commodity information is moved towards the upper section. The first commodity information display portion 421 can scroll-display the commodity information in an upper-lower direction, and can thus display all the registered commodity information by scrolling or the like.

The second commodity information display portion 422 is also referred to as a current area and displays the piece of latest registered commodity information (most recently registered item). The displayed commodity information includes a commodity name, a quantity, an amount due, an attribute, and the like. Since the second commodity information display portion 422 is displayed using a larger region and larger characters than those of the display of the pieces of commodity information in the first commodity information display portion 421, the second commodity information display portion 422 is more easily viewable.

The customer information display portion 423 displays customer information such as accumulated points held by the customer. The customer information is displayed based on, for example, a member code read from a member card of the customer by the card reader 7. The shift button 424 is operated when a commodity (product) to which no code symbol is attached is to be registered. When the shift button 424 is operated, the first display unit 41 displays a registration screen on which a plurality buttons corresponding to different commodities are displayed. The operator can register the commodity to which no code symbol is attached by selecting the appropriate registration button or entering/selecting appropriate information for the identifying the commodity. The transaction information display portion 425 displays a total quantity (total number of items registered) and a total amount of money due for all the registered commodities.

Returning to FIG. 4, when the operator edits the commodity information displayed on the registration screen, that is, when the operator changes at least one portion of the commodity information displayed on the registration screen, the POS terminal 1 executes editing (and editing process) (ACT 3).

For example, the registered commodity information might be edited in the following cases. When the store holds a store-wide discount sale but the unit price in the commodity master 112 is not corrected to a reflect the discounted amount, the operator may manually edit the unit price in the registered commodity information. When the store temporarily offers a limited-time discount promotion or the like, the operator similarly edits the discount amount in the registered commodity information. When the customer purchases another item of a previously registered commodity, the operator may edit the quantity in the registered commodity information. When the customer eats or drinks a commodity in the store, that is, in a case of so-called eat-in (in store consumption), the operator may edit the tax treatment for the registered commodity information (e.g., groceries may be taxed differently than restaurant/dine-in consumption in some jurisdictions).

When the commodity registration is completed for all the commodities being purchased by the customer (and if there editing required, and when the editing has been completed), the subtotal button 431 (see FIG. 6) is operated by the operator. Accordingly, the settlement input declaring the start of settlement of the purchase price is performed, and the POS terminal 1 receives the settlement input (ACT 4).

Next, the POS terminal 1 executes accounting (ACT 5). When the accounting process (payment handling) performed by the POS terminal 1 is completed, the transaction ends. The accounting in this context includes settlement performed by the settlement unit 1007, display control performed by the display control unit 1008, and receipt issuance performed by the receipt issuance unit 1009.

The editing can be executed before processing related to the settlement is started even after the settlement input is received. For example, in a case of the cash settlement, if an amount of cash received from the customer is not input even after the settlement input is received, the editing can still be executed. Further, in a case of the credit settlement, if the customer information is not read from the credit card by the card reader 7 even after the settlement input is received, the editing can still be executed. In these cases, when receiving the input to edit the registered commodity information, the POS terminal 1 reads the commodity information from the commodity information unit 1031, and displays a first editing screen.

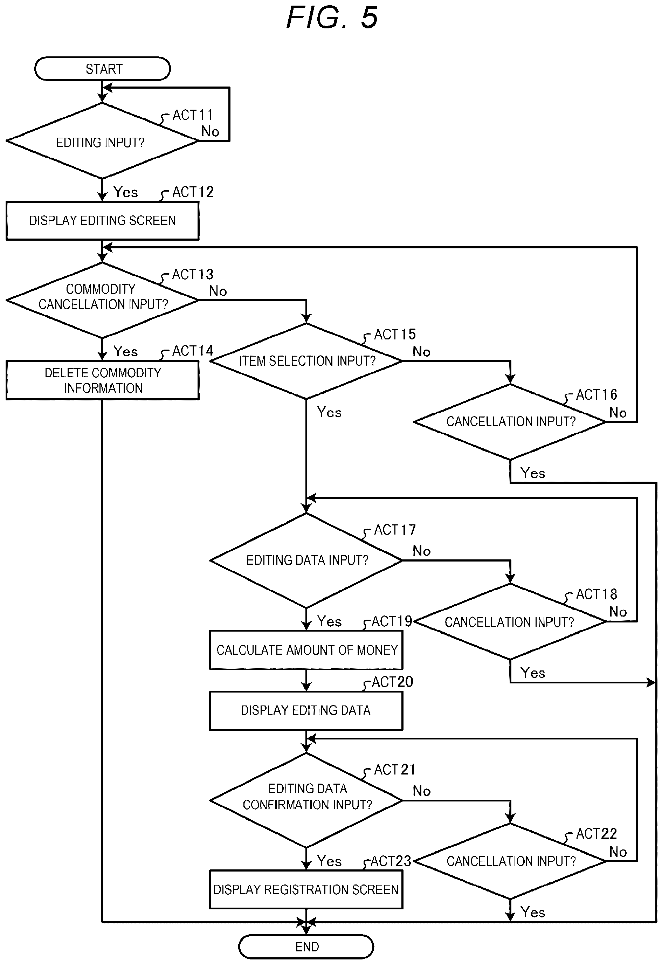

Next, the editing executed by the POS terminal 1 will be described together with a screen displayed by the first display unit 41. FIG. 5 is a flowchart showing a flow of the editing process performed by the control unit 10 of the POS terminal 1.

The control unit 10 determines whether the commodity input unit 1003 has received the editing input information (ACT 11). In other words, the control unit 10 determines whether any one of the commodity information displayed in the first commodity information display portion 421 is selected, or the commodity information displayed in the second commodity information display portion 422 is selected on the first registration screen in FIG. 6. When a region in which the commodity name is displayed is touched (or otherwise selected) on the first registration screen, the control unit 10 determines that the commodity input unit 1003 has received the editing input information. The input method for the editing input information is not limited to the above. For example, an editing button may be displayed in the information display portion 420, and the commodity information may be selectable after the editing button is operated. In this case, when the operator unintentionally touches the region in which the commodity name is displayed, there is an advantage that the first editing screen is not displayed only by the touch.

When the commodity input unit 1003 does not receive the editing input information (N in ACT 11), the control unit 10 returns to the processing of ACT 11 and waits. When the commodity input unit 1003 receives the editing input information (Y in ACT 11), the display control unit 1008 causes the first display unit 41 to display the first editing screen related to the commodity information of the commodity selected by the commodity input unit 1003 (ACT 12). The first editing screen is an editing screen before the editing data is input.

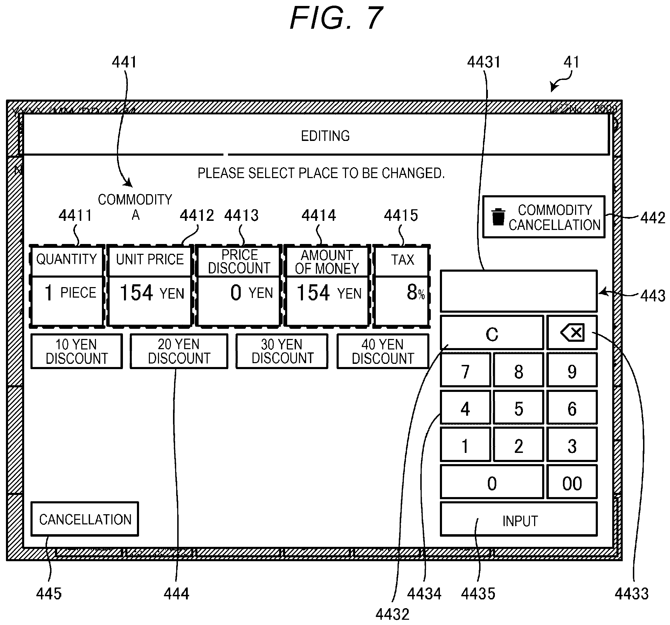

FIG. 7 is a diagram showing the first editing screen. The first editing screen may be displayed in a pop-up manner on the first registration screen, or may be displayed after shifting from the first registration screen. The first editing screen displays a commodity information display portion 441, a commodity cancellation button 442, a numeric keypad 443, a plurality of preset buttons 444, and a cancellation button 445.

The commodity information display portion 441 displays items that constitute the commodity information. The commodity information display portion 441 includes a quantity display portion 4411, a unit price display portion 4412, a discount amount display portion 4413, an amount of money display portion 4414, and a tax rate display portion 4415.

The quantity display portion 4411 displays a registered quantity for a selected commodity. The unit price display portion 4412 displays a unit price of the selected commodity. The discount amount display portion 4413 displays an amount discounted from a unit price or a reduced amount. The discount is a concept including a discount of subtracting a certain amount of money from the unit price, and a reduction of subtracting an amount of money at a certain proportion from the unit price. The tax rate display portion 4415 displays a consumption tax rate applied to the selected commodity.

The commodity cancellation button 442 is an operation element for canceling commodity registration of the selected commodity. When the commodity cancellation button 442 is operated, the commodity information of the commodity displayed in the commodity information display portion 441 is deleted from the commodity information unit 1031. Accordingly, the commodity registration of the commodity displayed in the commodity information display portion 441 is canceled.

The numeric keypad 443 is an operation element for inputting the editing data. The numeric keypad 443 includes a display frame 4431, a clear key 4432, a deletion key 4443, numeric keys 4434, and an input key 4435.

The display frame 4431 displays numerical values input using the numeric keys. The clear key 4432 is a key for clearing a numerical value displayed in the display frame 4431. The deletion key 4443 is a key for clearing a most recently input numerical value. The numeric key 4434 is a key for inputting a numerical value of the editing data. The input key 4435 is a key for confirming a numerical value displayed on the display frame 4431 as the editing data.

The preset button 444 is an operation element for inputting the editing data. Specifically, the preset button 444 is used when inputting a discount amount as the editing data. In the present embodiment, four preset buttons 444 including a 10 yen discount, a 20 yen discount, a 30 yen discount, and a 40 yen discount are prepared. When any one of these preset buttons 444 is operated, a corresponding discount amount is displayed in the discount amount display portion 4413. When the preset button 444 is operated a plurality of times, a total amount of discount amounts corresponding to operations is displayed in the discount amount display portion 4413.

The cancellation button 445 is operated when the editing of the commodity information of the selected commodity is to be canceled. When the cancellation button 445 is operated, the first editing screen is closed, and the first registration screen is displayed.

Returning to the flowchart of FIG. 5, the editing process will be described. The control unit 10 determines whether the reception unit 1005 receives a commodity cancellation input (ACT 13). In other words, the control unit 10 determines whether the commodity cancellation button 442 is operated on the first editing screen.

If the reception unit 1005 receives the commodity cancellation input (Y in ACT 13), the editing unit 1006 deletes the commodity information displayed on the first editing screen from the commodity information unit 1031 (ACT 14). The control unit 10 ends the editing. At this time, the display control unit 1008 causes the first display unit 41 to display the first registration screen from which the commodity information is deleted.

In the processing of ACT 13, when the reception unit 1005 does not receive the commodity cancellation input (N in ACT 13), the control unit 10 determines whether the selection unit 1004 receives an item selection input (ACT 15). In other words, the control unit 10 determines whether any one of the quantity display portion 4411, the unit price display portion 4412, the discount amount display portion 4413, the amount of money display portion 4414, and the tax rate display portion 4415 has been touched (or otherwise selected) on the first editing screen.

If the selection unit 1004 does not receive the item selection input (N in ACT 15), the control unit 10 then determines whether the reception unit 1005 receives a cancellation input (ACT 16). In other words, the control unit 10 determines whether the cancellation button 445 is operated on the first editing screen.

When the reception unit 1005 does not receive the cancellation input (N in ACT 16), the control unit 10 returns to the processing of ACT 13. When the reception unit 1005 receives the cancellation input (Y in ACT 16), the control unit 10 ends the editing. At this time, the display control unit 1008 causes the first display unit 41 to display the first registration screen.

In the processing of ACT 15, when the selection unit 1004 receives the item selection input (Y in ACT 15), the control unit 10 determines whether the reception unit 1005 receives an editing data input (ACT 17). In other words, the control unit 10 determines whether the numeric key 4434 of the numeric keypad 443 is operated or any one of the preset buttons 444 is operated on the first editing screen.

When the reception unit 1005 does not receive the editing data input (N in ACT 17), the control unit 10 determines whether the reception unit 1005 receives the cancellation input (ACT 18). In other words, the control unit 10 determines whether the cancellation button 445 is operated on the first editing screen.

If the reception unit 1005 does not receive the cancellation input (N in ACT 18), the control unit 10 returns to the processing of ACT 17. When the reception unit 1005 receives the cancellation input (Y in ACT 18), the control unit 10 ends the editing. At this time, the display control unit 1008 causes the first display unit 41 to display the first registration screen.

In the processing of ACT 17, when the reception unit 1005 receives the editing data input (Y in ACT 17), the editing unit 1006 calculates an amount of money corresponding to the input editing data (ACT 19). For example, when the reception unit 1005 receives editing data related to a quantity, the editing unit 1006 multiplies the unit price displayed on the editing screen by the received quantity to calculate the amount of money.

Next, the display control unit 1008 causes the first display unit 41 to display a second editing screen that additionally displays the edited data received by the reception unit 1005 and the amount of money calculated by the editing unit 1006 on the first editing screen (ACT 20).

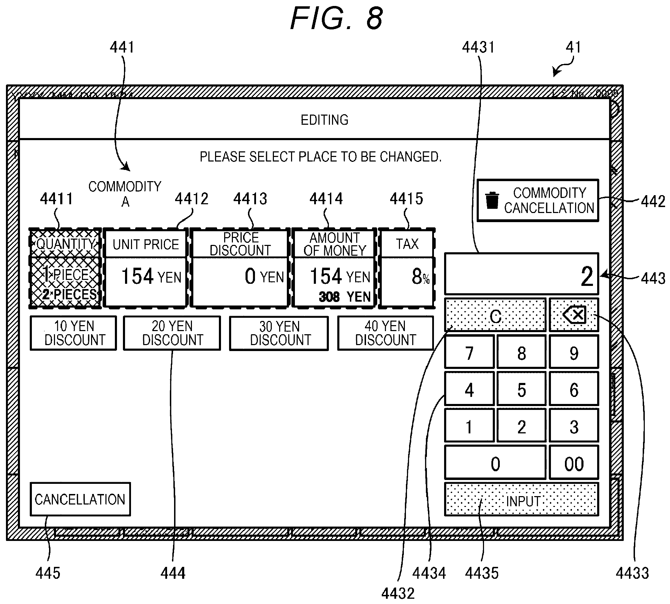

FIG. 8 is a diagram showing the second editing screen. The shown example shows a case where the reception unit 1005 receives the editing data input related to the quantity (number of the same item). In the second editing screen shown in FIG. 8, the same reference numerals are assigned to aspects similar to those of the first editing screen shown in FIG. 7, and repeated description thereof will be omitted.

In the quantity display portion 4411, in addition to "1 piece" that is already registered information, "2 pieces" corresponding to edited data "2" input by the numeric key 4434 is also displayed. The display of the "2 pieces" is performed side by side with the display of the " 1 piece", and is performed in a display format different from that of the display of the "1 piece". Specifically, the "2 pieces" text is displayed directly below the " 1 piece" text, and is displayed in a color different from that of the display of the " 1 piece" text (indicated as bold vs. normal text in FIG. 8).

In other words, the display control unit 1008 causes the commodity information of the commodity selected by the commodity input unit 1003 to be displayed for each item, and causes the edited data (changed data) received by the reception unit 1005 to be displayed side by side with the original (unedited) information on the editing screen. The display control unit 1008 may make the "2 pieces" and the " 1 piece" adjacent to each other in a direction other than the upper-lower direction.

The display control unit 1008 can be said to cause the data of the commodity information selected by the selection unit 1004 and the editing data received by the reception unit 1005 to be displayed in different display forms on the editing screen. Here, the different display forms are not limited to displaying in different colors, and may be different in a character size, a font, or the like.

In the amount of money display portion 4414, in addition to "154 yen" that is the registered information, an amount of money "308 yen" calculated by the editing unit 1006 is displayed. Similar to the quantity display portion 4411, in the amount of money display portion 4414, the display of the "308 yen" is arranged on a lower side of the display of the "154 yen", and the "308 yen" is displayed in a color different from the display of the "154 yen".

The second editing screen displays the data of the commodity information selected by the selection unit 1004 and the editing data received by the reception unit 1005 on the same screen of the first display unit 41. Accordingly, the operator can input the editing data while checking the data of the registered commodity information and the input editing data. Therefore, the POS terminal 1 can prevent the operator from forgetting to input the editing data and erroneously inputting the editing data, and can improve operability of the operator.

The second editing screen displays the editing data received by the reception unit 1005 side by side with data of an item corresponding to the editing data. That is, the received editing data is displayed side by side with the data before the editing. Accordingly, the operator easily views the input editing data and the registered data of an item corresponding to the editing data by performing a comparison between the input editing data and the registered data of the item. Also in this respect, the POS terminal 1 can improve the operability of the operator.

The second editing screen displays the original commodity information selected by the selection unit 1004 and the editing data received by the reception unit 1005 in different colors. Accordingly, the operator can easily identify the data of the items of the already registered commodity information and the newly input editing data. Also in this respect, the POS terminal 1 can improve the operability of the operator.

Further, the second editing screen displays the numeric keypad 443 and the preset buttons 444 together. Accordingly, the operator can input the editing data by only operating the second editing screen. Also in this respect, the POS terminal 1 can improve the operability of the operator. The second editing screen is particularly effective in a configuration not including the first operation unit 51 made of the keyboard.

Returning to the flowchart of FIG. 5, the editing will be described. After the second editing screen is displayed in ACT 20, the control unit 10 determines whether the reception unit 1005 receives editing data confirmation input (ACT 21). In other words, the control unit 10 determines whether the input key 4435 of the numeric keypad 443 is operated on the second editing screen.

When the reception unit 1005 does not receive the editing data confirmation input (N in ACT 21), the control unit 10 determines whether the reception unit 1005 receives the cancellation input (ACT 22). In other words, the control unit 10 determines whether the cancellation button 445 is operated on the second editing screen.

If the reception unit 1005 does not receive the cancellation input (N in ACT 22), the control unit 10 returns to the processing of ACT 21. When the reception unit 1005 receives the cancellation input (Y in ACT 22), the control unit 10 ends the editing. At this time, the display control unit 1008 causes the first display unit 41 to display the first registration screen.

In the processing of ACT 21, when the reception unit 1005 receives the editing data confirmation input (Y in ACT 21), the display control unit 1008 causes the first display unit 41 to display a second registration screen (ACT 23). The control unit 10 ends the editing.

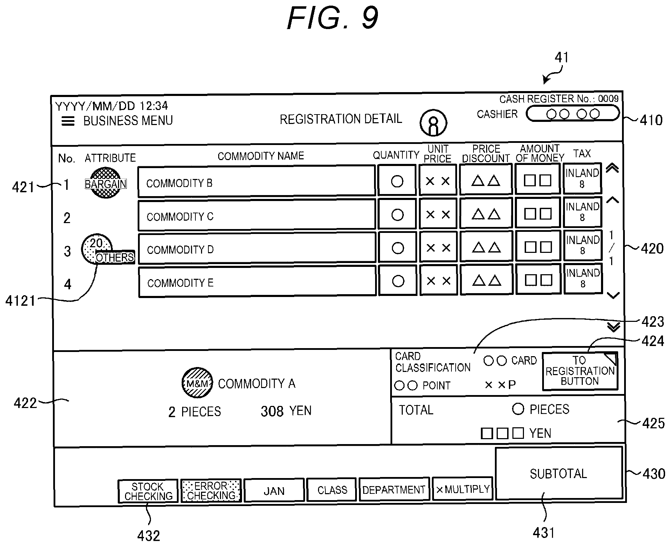

FIG. 9 is a diagram showing the second registration screen. In the second registration screen shown in FIG. 9, the same reference numerals are assigned to aspects similar to those of the first registration screen shown in FIG. 6, and repeated description thereof will be omitted.

On the second registration screen, the edited commodity information is deleted from the first commodity information display portion 421 and displayed in the second commodity information display portion 422. Commodity information previously displayed in the second commodity information display portion 422 is deleted from the second commodity information display portion 422 and displayed in the first commodity information display portion 421. More specifically, commodity information displayed in a lower section with respect to the commodity information deleted from the first commodity information display portion 421 is moved to an upper section one section at a time.

If the subtotal button 431 is operated on the second registration screen, the settlement unit 1007 executes the settlement based on the edited commodity information.

The second registration screen displays the edited commodity information in the second commodity information display portion 422 that is the current area. Since the display of the commodity information in the second commodity information display portion 422 is performed using a larger region and larger characters than those of the display of one piece of commodity information in the first commodity information display portion 421, the operator is easy to recognize the edited commodity information.

As described above, the POS terminal 1 according to an embodiment includes: a selection unit 1004 that selects the commodity information to be edited from among the commodity information of products registered for purchase by the customer; a reception unit 1005 that receives the edited data for editing the commodity information selected by the selection unit 1004; a display control unit 1008 that causes the same screen (the second editing screen) of the first display unit 41 to display the commodity information selected by the selection unit 1004 before editing along with the edited version of the commodity information; and an editing unit 1006 that edits the commodity information selected by the selection unit 1004 based on the edited data received by the reception unit 1005.

Accordingly, before the registered data is rewritten to match the edited data, the POS terminal 1 displays the edited data and the already registered data on one screen (on the same screen as one another at the same time for comparison or the like). Therefore, the operator can input the edited data while comparing the registered commodity information (the data before the editing) and the just input edited data. Therefore, the POS terminal 1 can prevent the operator from forgetting to edit the data or erroneously inputting the for editing data, and can improve operability of the operator.

When the commodity input unit 1003 selects a commodity that is an editing target, the display control unit 1008 of the POS terminal 1 according to the embodiment causes the first display unit 41 to display the first editing screen for editing the commodity information of the selected commodity.

Accordingly, the operator can more quickly edit the commodity information. Therefore, the POS terminal 1 can improve the operability for the operator.

In the POS terminal 1 according to an embodiment, the reception unit 1005 can receive data for editing any one of the items of the commodity information, and the display control unit 1008 causes the commodity information selected by the commodity input unit 1003 to be displayed for each item, and causes the edited data received by the reception unit 1005 to be displayed side by side with the data of the corresponding item of the original commodity information on the second editing screen.

Accordingly, the operator can view the input data for editing and the data of the item of the already registered commodity information side by side, and easily views the editing data being input and the original data for a comparison between the revised input data and the original data of the item. Also in this respect, the POS terminal 1 can improve the operability of the operator.

In addition, the display control unit 1008 of the POS terminal 1 according to an embodiment causes the commodity information selected by the selection unit 1004 and the edited data received by the reception unit 1005 to be displayed in different display forms (formats) on the second editing screen.

Accordingly, the operator can easily identify the already registered commodity information and the just input editing data. Also in this respect, the POS terminal 1 can improve the operability of the operator.

The display control unit 1008 of the POS terminal 1 according to an embodiment causes the operation element (numeric keypad 443, preset buttons 444) for inputting the editing data to be displayed on the first editing screen and/or the second editing screen.

Accordingly, the operator can input editing data by operating either one of the first editing screen or the second editing screen. Also in this respect, the POS terminal 1 can improve the operability of the operator.

In an embodiment, the control program executed by the POS terminal 1 may be recorded on non-transitory, a computer-readable recording medium such as a CD-ROM. Further, the control program executed by the POS terminal 1 according to the an embodiment may be provided by being stored in a computer connected to a network such as the Internet and being downloaded via a network, or may be accessed via a network such as the Internet.

The POS terminal 1 may be of a cloud type. Specifically, such a POS terminal 1 need not include or store therein the commodity master 112 and the commodity information unit 1031. The information stored in the commodity master 112 and the commodity information unit 1031 may be managed by a cloud server that can communicate with the POS terminal 1. In this case, the POS terminal 1 includes a control program for displaying the various display screens as described above, though with information reflecting that managed by the cloud server, a program for communicating with a peripheral device such as the receipt printer and the cloud server, and the like.

While the embodiment described herein has been explained above, the embodiment has been presented by way of example only, and is not intended to limit the scope of the exemplary embodiment. The embodiment can be implemented in various other forms, and various omissions, substitutions, and changes can be made without departing from the spirit of the exemplary embodiment. The embodiment and a modification thereof are included in the scope and gist of the exemplary embodiment, and are included in the scope of the exemplary embodiment disclosed in the scope of claims and equivalent scope thereof.

## Claims

1. A sales data processing apparatus, comprising:
a processor configured to:
register commodity information for commodities in a sales transaction;
receive an operator selection designating an item of registered commodity information;
receive editing data for editing the designated item of registered commodity information;
edit the designated item of registered commodity information according to the received editing data; and
cause a display screen to display the edited item of registered commodity information and the unedited item of registered commodity information together on the display screen.

2. The sales data processing apparatus according to claim 1, wherein the processor is further configured to:
cause the display screen to display an editing screen for editing items of commodity information.

3. The sales data processing apparatus according to claim 2, wherein the editing screen includes a numeric keypad operation element thereon.

4. The sales data processing apparatus according to any one of claims 1 to 3, wherein the edited item of registered commodity information and the unedited item of registered commodity information are side by side with each other on the display screen.

5. The sales data processing apparatus according to claim 4, wherein the edited item of registered commodity information and the unedited item of registered commodity information are displayed in different font formats.

6. The sales data processing apparatus according to any one of claims 1 to 5, further comprising:
a first display facing an operator of the sales data processing apparatus; and
a second display facing a customer, wherein
the display screen is a part of the first display.

7. The sales data processing apparatus according to any one of claims 1 to 6, further comprising:
a cash drawer to receive payments for settling the sales transaction;
a receipt printer for printing a transaction receipt for the sales transaction; and
a product scanner for obtaining the commodity information for the commodities in the sales transaction.

8. A point-of-sale terminal for retail stores, the point-of-sale terminal comprising:
a display screen including a touch panel input unit;
a product scanner for obtaining commodity information for commodities in a sales transaction;
a processor according to any one of claims 1 to 7.

9. The point-of-sale terminal according to claim 8, further comprising:
a cash drawer to receive payments for settling the sales transaction; and
a receipt printer for printing a transaction receipt for the sales transaction.

10. A non-transitory, computer-readable medium storing program instructions which when executed by a processor of a sales data processing apparatus causes the apparatus to perform a method comprising:
registering commodity information for commodities in a sales transaction;
receiving an operator selection designating an item of registered commodity information;
receiving editing data for editing the designated item of registered commodity information;
editing the designated item of registered commodity information according to the received editing data; and
causing a display screen to display the edited item of registered commodity information and the unedited item of registered commodity information together on the display screen.

11. The non-transitory, computer-readable medium according to claim 10, the method further comprising:
causing the display screen to display an editing screen for editing items of commodity information.

12. The non-transitory, computer-readable medium according to claim 11, wherein the editing screen includes a numeric keypad operation element thereon.

13. The non-transitory, computer-readable medium according to claim 12, wherein the edited item of registered commodity information and the unedited item of registered commodity information are side by side with each other on the display screen.

14. The non-transitory, computer-readable medium according to claim 13, wherein the edited item of registered commodity information and the unedited item of registered commodity information are displayed in different font formats.
